# FASCICULE DE BREVET EUROPEEN

(11) **EP 1 726 486 B1**
(45) Date de publication et mention de la délivrance du brevet: **08.10.2008**
(21) Numéro de dépôt: 06300529.2
(22) Date de dépôt: 29.05.2006
(51) Int. Cl.: B60R 7/02, F16B 45/00

(54) **Crochet pour le maintien d'au moins un élément**
Haken zum Halten an mindestens einem Element
Hook for holding at least one element.

(30) Priorité: 25.05.2005 FR 0551375; 20.09.2005 FR 0552820
(43) Date de publication de la demande: 29.11.2006
(73) Titulaire: RENAULT S.A.S., 92100 Boulogne Billancourt (FR)
(72) Inventeur: Legrand, Jean-Pierre, 28300 Berchères Saint Germain (FR)

(56) Documents cités:
- US-A- 4 599 767
- US-A- 5 027 477
- US-A1- 2001 045 085
- US-A1- 2001 046 425
- US-B1- 6 584 655

## Description

L'invention concerne un crochet pour le maintien d'au moins un élément dans un véhicule automobile. Plus particulièrement, ce crochet est destiné à une utilisation dans une zone de chargement.

Souvent, les petits bagages et, en particulier, les sacs de commissions sont disposés à l'intérieur d'un véhicule sur les sièges ou sur le plancher, ou éventuellement sur la plage arrière. Les plus gros et plus lourds bagages sont disposés dans la zone de chargement du véhicule, autrement appelé le coffre à bagages. Cependant, durant un trajet, tous ces bagages peuvent se déplacer librement et se renverser par exemple, lors d'un virage car ils ne sont pas retenus ou maintenus en place. Ceci est déplaisant pour l'utilisateur du véhicule, particulièrement dans le cas de sacs de commissions pleins dans lesquels les petits objets se renversent souvent à l'extérieur des sacs. Afin d'éviter les inconvénients mentionnés ci-dessus, les zones de chargement de véhicule automobile sont munis de crochets de maintien de sacs vissés ou clipsés sur la garniture ou éventuellement démoulés sur cette dernière.

A titre illustratif, la publication WO 97/48575 propose un crochet clipsé sur la garniture de la zone de chargement à une hauteur définie. Cependant, ce type de crochet fixe ne permet pas de gérer les différentes tailles de sacs. De plus, le risque de le heurter lors d'un chargement d'objets encombrants est important. Enfin, les utilisateurs peuvent être incité à accrocher des objets lourds, ce qui oblige les concepteurs à renforcer la garniture en ajoutant un vissage sur la tôle du véhicule.

En outre, il existe aussi des crochets se trouvant au bout d'une sangle fixée sur les parois d'une zone de chargement. La sangle est fixée sur une zone d'accueil haute suffisamment raide comme sous les tablettes centrales ou latérales pour permettre l'accrochage de sacs de taille importante comme des sacs de sport ou des sacs d'école. Cependant, cette position haute du crochet n'est pas adaptée pour le maintien de sacs de commissions car ces derniers se balanceraient dans la zone de chargement lors d'un trajet. Cependant, même si ce moyen de fixation de la sangle 14 à une paroi de fixation est plus résistant, il ne peut pas supporter tout type de charges. Le risque étant qu'une charge trop importante pourrait détériorer de manière significative la paroi de la zone de chargement. Afin d'éviter cet inconvénient, l'invention prévoit l'utilisation d'un crochet apte à gérer une charge lourde afin d'éviter toute détérioration. Pour cela, la publication GB 2 396 655 propose un crochet en deux parties : une partie fixe supportée par une paroi de l'habitacle et une partie mobile en rotation entre une position d'utilisation et une position de libération de charge quand celle-ci dépasse un seuil critique prédéfini. Cependant, ce crochet est complexe puisque qu'il nécessite le moulage de deux pièces puis leur assemblage par un opérateur.

La publication US 6 584 655 divulgue un crochet de maintien d'un élément apte à se solidariser ou se désolidariser d'une base. Cependant, le logement apte à recevoir ledit élément est un trou ce qui rend le crochet inadapté à la tenue de sac avec des poignées.

Ainsi, l'invention vise à pallier ces inconvénients en proposant un dispositif de maintien de sacs amélioré qui puisse gérer en même temps la hauteur du crochet et qui prévoit un moyen pour ne pas détériorer l'habitacle en cas de charge lourde.

A ce titre, l'invention fournit un crochet de maintien d'au moins un élément comprenant deux pièces : une première pièce apte à recevoir une deuxième pièce, ladite deuxième pièce étant apte à passer d'une position d'utilisation dans laquelle la deuxième pièce est emboîtée selon une direction longitudinale dans la première pièce à une position de libération de charge lorsque la masse d'au moins un élément à supporter dépasse un seuil de charge critique, ledit seuil de charge critique induisant une résultante des forces transversale et orientée vers l'intérieur du crochet au niveau d'au moins une ligne de contact entre les deux pièces provoquant la désolidarisation totale des deux pièces caractérisé en ce que la deuxième pièce comprend deux parties parallèles et décalées selon une direction orthogonale aux directions longitudinales et transversales : une partie de solidarisation avec la pièce et une partie d'accrochage d'au moins un élément.

Selon une caractéristique de l'invention, la deuxième pièce présente un profil en U.

Avantageusement, la partie de solidarisation comprend deux languettes montées élastiquement pour être sollicitées transversalement afin de solidariser les deux pièces ou de les séparer.

Avantageusement encore, les bords latéraux des languettes possèdent au moins une ligne de contact avec la première pièce de manière à permettre le maintien de la deuxième pièce dans la première pièce.

Selon une caractéristique de l'invention, la première pièce est un boîtier de forme complémentaire à la partie de solidarisation non sollicitée élastiquement. Ledit boîtier comporte une ouverture principale orientée longitudinalement et apte à recevoir la partie de solidarisation de la deuxième pièce. Le boîtier comporte, en outre, des ouvertures latérales de manière à solliciter la partie de solidarisation afin de séparer les deux pièces.

De préférence, le crochet est relié à la structure du véhicule par un élément de retenue de longueur réglable.

De préférence encore, la longueur de l'élément de retenue se règle automatiquement en fonction de la masse de l'élément.

Enfin, la masse de l'élément limite le maintien de la partie de solidarisation dans le boîtier en position d'utilisation.

D'autres caractéristiques et avantages de l'invention apparaîtront clairement à la lecture de la description suivante de deux modes de réalisation non limitatifs de celle-ci, en liaison avec les dessins annexés sur lesquels :
- la figure 1 représente une vue en perspective éclatée d'un crochet selon l'invention comprenant les deux pièces selon un premier mode de réalisation,
- la figure 2 représente une section transversale du crochet lorsque celui-ci est en position d'utilisation,
- la figure 3 représente une coupe longitudinale d'un crochet selon un deuxième mode de réalisation lorsque ce dernier est en position d'utilisation, et
- la figure 4 représente une vue générale en perspective du crochet en position d'utilisation et de sa sangle fixée sur une paroi du véhicule automobile.

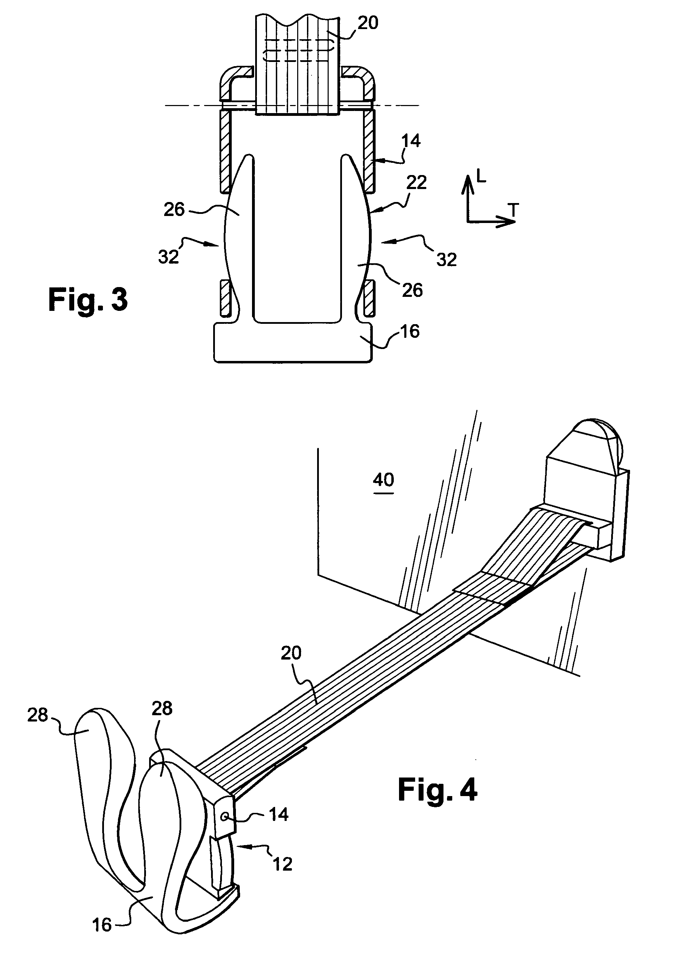

Le dispositif de maintien selon l'invention est destiné à se fixer dans une zone de chargement de véhicule. Plus précisément, il s'agit d'un crochet 12 se trouvant à l'extrémité d'une sangle élastique 20, l'autre extrémité étant fixée sur une paroi 40 de la zone de chargement comme l'illustre la figure 4 et par exemple directement sur la caisse du véhicule ou sous un élément d'habillage tel que celui de la tablette latérale dans le cas où le dispositif de maintien est placé latéralement dans la zone de chargement.

Le crochet 12, proposé dans la présente invention, est destiné à recevoir des éléments ou, plus précisément, des sacs comportant des poignées de transport.

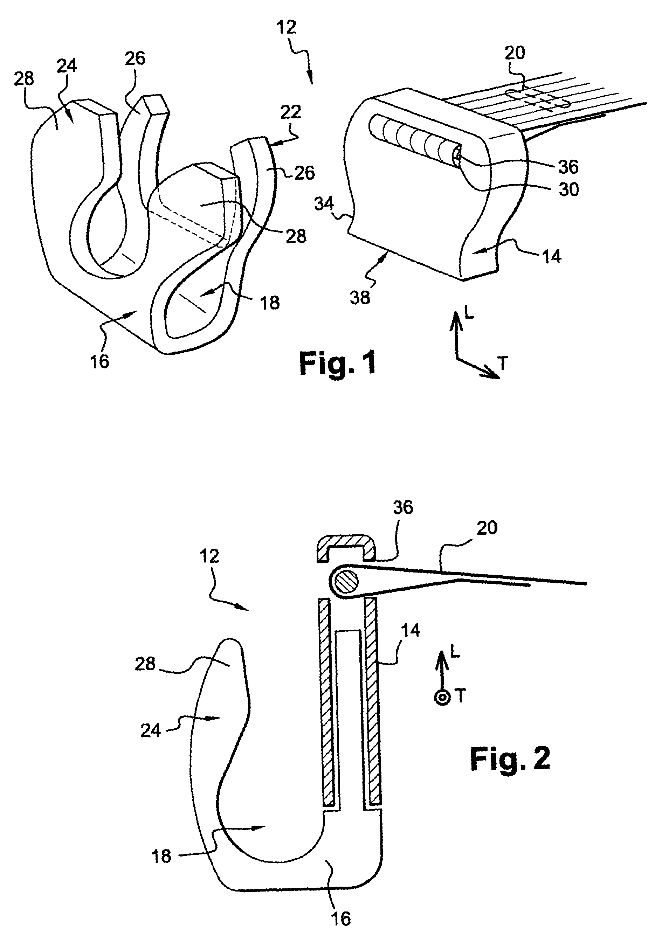

Le crochet 12, selon l'un des deux modes de réalisation, est réalisé en deux pièces 14 et 16 tel qu'illustré sur la figure 1, l'une fixe et l'autre mobile par déclipsage lors du passage d'une position d'utilisation dans laquelle les deux pièces 14, 16 sont emboîtées à une position de libération de charge lorsque la masse d'au moins un sac atteint un seuil de charge critique prédéterminé. Cette dernière position est caractérisée par le fait que la seconde pièce 16 se désolidarise totalement de la première 14 pour éviter les éventuelles détériorations d'une des parois 40 de l'habitacle à laquelle ce crochet 12 est fixé. Les pièces sont réalisées par moulage.

La pièce 14 est une pièce femelle qui est apte à recevoir la pièce 16 (qui est une pièce mâle) grâce à une unique ouverture 38 orientée longitudinalement vers le bas du véhicule. Selon le premier mode de réalisation, la pièce 14 se présente sous la forme d'un boîtier de forme complémentaire à la partie de la pièce 16 destinée à s'engager dans ledit boîtier 14. Ce boîtier comporte, en outre, au moins une fente transversale 30 apte à recevoir une sangle 20 permettant de solidariser la zone de chargement et le crochet 12. La sangle 20 est montée mobile en rotation autour d'une tige 36 logée dans le boîtier et accessible par la fente 30. De préférence, la sangle 20 est élastique pour lui conférer une longueur réglable en fonction de la masse des sacs, ce qui permet de gérer différentes tailles de sacs afin d'éviter leur renversement quand ils reposent sur le plancher de la zone de chargement. Le boîtier 14 possède une forme générale rectangulaire comprenant des faces latérales bombées et un léger étranglement 34 à sa base au niveau de l'ouverture. La pièce 16 est ainsi maintenue dans ledit boîtier 14 et ne pas se désolidarisera pas sous une masse inférieure au seuil de charge critique prédéterminé. Selon un autre mode de réalisation de cette pièce 14 illustré par les figures 3 ou 4, ses faces latérales peuvent comporter des ouvertures 32 de manière à faciliter le décrochage volontaire de la pièce 16 par pression sur ladite pièce.

La pièce 16, représentée sur la figure 1, est la partie amovible du crochet 12. Elle présente un profil général en U et comprend deux parties parallèles orientées longitudinalement et décalées selon une direction orthogonale aux directions longitudinale et transversales. Une première partie de solidarisation 22 des deux pièces comporte deux languettes 26 montées de manière élastique selon une direction orthogonale aux directions longitudinale et transversale précitées et orientées longitudinalement vers le haut de manière à s'engager dans la pièce 14. L'élasticité des languettes 26 va déterminer le seuil de charge critique que le crochet 12 peut recevoir afin d'éviter le passage à la position de libération de charge. En effet, plus les languettes 26 sont rigides et plus le crochet supporte une charge importante. La figure 3 représente la coupe du crochet 12 en position d'utilisation lorsque le boîtier 14 comprend des ouvertures latérales 32. Les languettes 26 présentent avantageusement leurs bords latéraux, en contact avec le boîtier, bombés ou arrondis de manière à faciliter la séparation de la pièce 14 et de la pièce 16 si la masse d'au moins un sac est supérieure au seuil de charge critique prédéterminé et à maintenir les deux pièces emboîtées si la masse d'au moins un sac reste inférieure au seuil de charge critique prédéterminé. Le désengagement des pièces 14 et 16 s'effectue par glissement longitudinal de la pièce 16 hors de la pièce 14. Le mérite de l'invention repose donc sur la forme des languettes 26 de la pièce 16 et de son boîtier 14.

La seconde partie 24 de la pièce 16 possédant la fonction d'accrochage comporte au moins deux becs 28 aptes à retenir au moins deux sacs de commissions par leurs poignées de transport.

En position d'utilisation, le crochet 12 présente un profil en forme de U comme le représente la figure 2. La partie creuse du U forme un logement 18 pour l'accrochage de sacs avec des poignées de transport de diamètre compatible avec la largeur du logement 18.

Pour emboîter les deux pièces 14 et 16 afin de constituer le crochet 12 selon l'invention, un utilisateur devra faire glisser la pièce 16 longitudinalement vers le haut dans le boîtier 14. Son dégagement, comme exposé précédemment dans la description, peut être involontaire et automatique dès que la masse d'au moins un sac dépasse le seuil de charge critique, que le boîtier comporte ou non des ouvertures latérales 32. Son désengagement peut être aussi volontaire, tout d'abord, par déclipsage de la pièce 16 par pression vers l'intérieur du crochet sur les languettes 26 grâce auxdites ouvertures latérales 32 si le boîtier 14 en comporte ou simplement par glissement forcé vers le bas du véhicule pour le mode de réalisation du boîtier 14 sans ouvertures 32.

## Revendications

1. Crochet (12) de maintien d'au moins un élément comprenant deux pièces :
- une première pièce (14) apte à recevoir une deuxième pièce (16),
- la deuxième pièce (16) étant apte à passer d'une position d'utilisation dans laquelle la deuxième pièce (16) est emboîtée selon une direction longitudinale dans la première pièce (14) à une position de libération de charge lorsque la masse d'au moins un élément à supporter dépasse un seuil de charge critique, ledit seuil de charge critique induisant une résultante des forces transversale et orientée vers l'intérieur du crochet (12) au niveau d'au moins une ligne de contact entre les deux pièces (14) et (16) provoquant la désolidarisation totale des deux pièces (14) et (16),
**caractérisé en ce que** la deuxième pièce (16) présente deux parties parallèles et décalées selon une direction orthogonale aux directions longitudinales et transversales : une partie de solidarisation (22) avec la première pièce (14) et une partie d'accrochage (24) d'au moins un élément.

2. Crochet selon la revendication 1, **caractérisé en ce que** la partie de solidarisation (22) comprend deux languettes (26) montées élastiquement pour être sollicitées transversalement afin de solidariser les deux pièces (14) et (16) ou de les séparer.

3. Crochet selon la revendication 2, **caractérisé en ce que** les bords latéraux des languettes (26) possèdent au moins une ligne de contact avec la pièce (14) de manière à permettre le maintien de la pièce (16) dans la pièce (14).

4. Crochet selon la revendication 1, **caractérisé en ce que** la première pièce (14) est un boîtier de forme complémentaire à la partie de solidarisation non sollicitée élastiquement.

5. Crochet selon la revendication 4, **caractérisé en ce que** la première pièce (14) comporte une ouverture (38) orientée longitudinalement et apte à recevoir la partie de solidarisation (22).

6. Crochet selon l'une des revendications 4 ou 5, **caractérisé en ce que** la première pièce (14) comporte, en outre, des ouvertures latérales (32) de manière à solliciter transversalement la partie de solidarisation (22) afin de séparer les deux pièces.

7. Crochet selon l'une des revendications précédentes, **caractérisé en ce que** le crochet (12) est relié à la structure du véhicule par un élément de retenue (20) de longueur réglable.

8. Crochet selon la revendication 7, **caractérisé en ce que** la longueur de l'élément de retenue (20) se règle automatiquement en fonction de la masse de l'élément.

9. Crochet selon l'une des revendications précédentes, **caractérisé en ce que** la masse de l'élément limite le maintien de la partie de solidarisation (22) dans la deuxième pièce (14) en position d'utilisation.

## Claims

1. Hook (12) for holding at least one item, comprising two parts:
- a first part (14) capable of receiving a second part (16),
- the second part (16) being capable of passing from a use position, in which the second part (16) is fitted in a longitudinal direction into the first part (14), to a load release position when the mass of at least one item to be supported exceeds a critical load threshold, the said critical load threshold inducing a resultant of forces that is transverse and oriented towards the inside of the hook (12) over at least one line of contact between the two parts (14) and (16), causing the complete detachment of the two parts (14) and (16),
**characterized in that** the second part (16) has two parallel portions which are offset in an orthogonal direction to the longitudinal and transverse directions: a portion (22) for securing to the first part (14) and a portion (24) for attaching at least one item.

2. Hook according to Claim 1, **characterized in that** the securing portion (22) comprises two tongues (26) mounted elastically so that they can be stressed transversely in order to secure the two parts (14) and (16) or to separate them.

3. Hook according to Claim 2, **characterized in that** the lateral edges of the tongues (26) have at least one line of contact with the part (14) so as to enable the part (16) to be held in the part (14).

4. Hook according to Claim 1, **characterized in that** the first part (14) is a housing whose shape complements the securing portion when the latter is not stressed elastically.

5. Hook according to Claim 4, **characterized in that** the first part (14) comprises a longitudinally oriented opening (38) capable of receiving the securing portion (22).

6. Hook according to either of Claims 4 and 5, **characterized in that** the first part (14) additionally comprises lateral openings (32) so that the securing portion (22) can be stressed transversely in order to separate the two parts.

7. Hook according to one of the preceding claims, **characterized in that** the hook (12) is connected to the structure of the vehicle by a retaining element (20) of adjustable length.

8. Hook according to Claim 7, **characterized in that** the length of the retaining element (20) is adjusted automatically depending on the mass of the item.

9. Hook according to one of the preceding claims, **characterized in that** the mass of the item limits the retention of the securing portion (22) in the second part (14) in the use position.

## Patentansprüche

1. Haken (12) zum Halten wenigstens eines Elements, der zwei Teile enthält:
- ein erstes Teil (14), das ein zweites Teil (16) aufnehmen kann,
- wobei das zweite Teil (16) aus einer Verwendungsposition, in der das zweite Teil (16) in einer Längsrichtung in das erste Teil (14) eingesetzt ist, in eine Lastfreigabeposition übergehen kann, wenn die Masse wenigstens eines zu unterstützenden Elements eine kritische Lastschwelle übersteigt, wobei die kritische Lastschwelle eine Resultierende von transversalen Kräften einführt, die auf Höhe wenigstens einer Kontaktlinie zwischen den zwei Teilen (14, 16) in den Haken (12) hinein orientiert ist, was die vollständige Loslösung der zwei Teile (14) und (16) hervorruft,
**dadurch gekennzeichnet, dass** das zweite Teil (16) zwei Abschnitte aufweist, die zueinander parallel und in einer Richtung, die zu der longitudinalen und der transversalen Richtung senkrecht ist, zueinander versetzt sind: einen Verbindungsabschnitt (22) mit dem ersten Teil (14) und einen Einhakabschnitt (24) wenigstens eines Elements.

2. Haken nach Anspruch 1, **dadurch gekennzeichnet, dass** der Verbindungsabschnitt (22) zwei Zungen (26) umfasst, die elastisch angebracht sind, um transversal beansprucht zu werden, um die zwei Teile (14) und (16) zu befestigen oder sie zu trennen.

3. Haken nach Anspruch 2, **dadurch gekennzeichnet, dass** die Seitenränder der Zungen (26) wenigstens eine Kontaktlinie mit dem Teil (14) besitzen, derart, dass das Teil (16) in dem Teil (14) gehalten werden kann.

4. Haken nach Anspruch 1, **dadurch gekennzeichnet, dass** das erste Teil (14) ein Behälter mit einer Form ist, die zu dem nicht elastisch beanspruchten Befestigungsabschnitt komplementär ist.

5. Haken nach Anspruch 4, **dadurch gekennzeichnet, dass** das erste Teil (14) eine Öffnung (38) aufweist, die longitudinal orientiert ist und den Verbindungsabschnitt (22) aufnehmen kann.

6. Haken nach einem der Ansprüche 4 oder 5, **dadurch gekennzeichnet, dass** das erste Teil (14) außerdem seitliche Öffnungen (32) aufweist, derart, dass der Verbindungsabschnitt (22) transversal beansprucht werden kann, um die zwei Teile zu trennen.

7. Haken nach einem der vorhergehenden Ansprüche, **dadurch gekennzeichnet, dass** der Haken (12) mit der Struktur des Fahrzeugs durch ein Halteelement (20) mit einstellbarer Länge verbunden ist.

8. Haken nach Anspruch 7, **dadurch gekennzeichnet, dass** sich die Länge des Halteelements (20) in Abhängigkeit von der Masse des Elements automatisch einstellt.

9. Haken nach einem der vorhergehenden Ansprüche, **dadurch gekennzeichnet, dass** die Masse des Elements das Festhalten des Verbindungsabschnitts (22) in dem zweiten Teil (14) in der Verwendungsposition begrenzt.
